# EUROPEAN PATENT APPLICATION

(11) **EP 4 848 051 A1**
(43) Date of publication of application: **02.12.2026**
(21) Application number: 24919830.0
(22) Date of filing: 29.10.2024
(51) Int. Cl.: G06F 3/0481

(54) **INTERACTION METHOD AND APPARATUS, AND ELECTRONIC DEVICE AND STORAGE MEDIUM**

(30) Priority: 24.01.2024 CN 202410106924
(71) Applicant: Chengdu Guanghexinhao Technology Co., Ltd., Chengdu, Sichuan 610095 (CN)
(72) Inventor: WANG, Wenjun, Beijing 100028 (CN); ZHONG, Tianlei, Beijing 100028 (CN); ZHONG, Zixing, Beijing 100028 (CN); WU, Hanfei, Beijing 100028 (CN); LI, Qianwen, Beijing 100028 (CN); HE, Wanlin, Beijing 100028 (CN); SHI, Pingping, Beijing 100028 (CN); PAN, Yiting, Beijing 100028 (CN); XU, You, Beijing 100028 (CN); KUANG, Shi, Beijing 100028 (CN)
(74) Representative: Isarpatent
(86) International application number: PCT/CN2024/128245
(87) International publication number: WO 2025/156750

(57) **Abstract**

Embodiments of the present disclosure provide an interaction method and apparatus, an electronic device, and a storage medium. The method includes: displaying, in response to a gifting operation request, a candidate resource object corresponding to the gifting operation request on a resource object display page; using, in response to a determining operation for a candidate resource object, the candidate resource object as a resource object to be gifted, and displaying a gifting configuration interface for the resource object to be gifted; and determining, in response to a configuration operation triggered for the gifting configuration interface, a target display configuration item corresponding to the gifting configuration interface, and sending, based on the target display configuration item, the resource object to be gifted to a target gift receiving account corresponding to the resource object to be gifted, so as to display the resource object to be gifted on the target gift receiving account based on the target display configuration item.

## Description

### CROSS-REFERENCE TO RELATED APPLICATION(S)

The present application claims priority to Chinese Patent Application No. 202410106924.3, filed on January 24, 2024 and entitled "INTERACTION METHOD AND APPARATUS, ELECTRONIC DEVICE, AND STORAGE MEDIUM", which is incorporated herein by reference in its entirety.

### FIELD

Embodiments of the present disclosure relate to the field of computer technologies, and in particular, to an interaction method and apparatus, an electronic device, and a storage medium.

### SUMMARY

The present disclosure provides an interaction method and apparatus, an electronic device, and a storage medium.

According to a first aspect, an embodiment of the present disclosure provides an interaction method. The method includes:
displaying, in response to a gifting operation request, a candidate resource object corresponding to the gifting operation request on a resource object display page, where the gifting operation request includes a target block, and the target block is used for describing a predefined geographic area;
using, in response to a determining operation for a candidate resource object, the candidate resource object as a resource object to be gifted, and displaying a gifting configuration interface for the resource object to be gifted, where the gifting configuration interface includes a plurality of candidate display configuration items corresponding to the resource object to be gifted, and the plurality of candidate display configuration items include at least one of the following types of information: at least one piece of candidate packaging configuration information, first description information of the resource object to be gifted, and at least one piece of candidate gift receiving account information; and
determining, in response to a configuration operation triggered for the gifting configuration interface, a target display configuration item corresponding to the gifting configuration interface, and sending, based on the target display configuration item, the resource object to be gifted to a target gift receiving account corresponding to the resource object to be gifted, so as to display the resource object to be gifted on the target gift receiving account based on the target display configuration item, where the target display configuration item includes target packaging configuration information corresponding to the resource object to be gifted and the target gift receiving account corresponding to the resource object to be gifted.

According to a second aspect, an embodiment of the present disclosure further provides an interaction apparatus. The apparatus includes:
a candidate resource object determining module configured to display, in response to a gifting operation request, a candidate resource object corresponding to the gifting operation request on a resource object display page, where the gifting operation request includes a target block, and the target block is used for describing a predefined geographic area;
a page display module configured to use, in response to a determining operation for a candidate resource object, the candidate resource object as a resource object to be gifted, and display a gifting configuration interface for the resource object to be gifted, where the gifting configuration interface includes a plurality of candidate display configuration items corresponding to the resource object to be gifted, and the plurality of candidate display configuration items include at least one of the following types of information: at least one piece of candidate packaging configuration information, first description information of the resource object to be gifted, and at least one piece of candidate gift receiving account information; and
a sending module configured to determine, in response to a configuration operation triggered for the gifting configuration interface, a target display configuration item corresponding to the gifting configuration interface, and send, based on the target display configuration item, the resource object to be gifted to a target gift receiving account corresponding to the resource object to be gifted, so as to display the resource object to be gifted on the target gift receiving account based on the target display configuration item, where the target display configuration item includes target packaging configuration information corresponding to the resource object to be gifted and the target gift receiving account corresponding to the resource object to be gifted.

According to a third aspect, an embodiment of the present disclosure further provides an electronic device. The electronic device includes:
one or more processors; and
a storage apparatus configured to store one or more programs, where
the one or more programs, when executed by the one or more processors, cause the one or more processors to implement the interaction method provided in any one of the embodiments of the present disclosure.

According to a fourth aspect, an embodiment of the present disclosure further provides a storage medium including computer-executable instructions. The computer-executable instructions, when executed by a computer processor, are used for performing the interaction method provided in any one of the embodiments of the present disclosure.

According to the embodiments of the present disclosure, the candidate resource object corresponding to the gifting operation request is displayed on the resource object display page in response to the gifting operation request; a candidate resource object is used as the resource object to be gifted in response to the determining operation for the candidate resource object, and the gifting configuration interface for the resource object to be gifted is displayed; and the target display configuration item corresponding to the gifting configuration interface is determined in response to the configuration operation triggered for the gifting configuration interface, and the resource object to be gifted is sent to the target gift receiving account corresponding to the resource object to be gifted based on the target display configuration item, so as to display the resource object to be gifted on the target gift receiving account based on the target display configuration item.

### BRIEF DESCRIPTION OF THE DRAWINGS

The above-mentioned and other features, advantages, and aspects of embodiments of the present disclosure become more apparent with reference to the following specific implementations and accompanying drawings. Throughout the accompanying drawings, the same or similar reference numerals denote the same or similar elements. It should be understood that the accompanying drawings are schematic and that parts and elements are not necessarily drawn to scale.
FIG. 1 is a schematic flowchart of an interaction method according to an embodiment of the present disclosure;
FIG. 2 is a schematic diagram of a resource object display page to which an embodiment of the present disclosure is applicable;
FIG. 3 is a schematic flowchart of selecting a resource object to be gifted to which an embodiment of the present disclosure is applicable;
FIG. 4 is a schematic diagram of a process of gifting a resource object to be gifted to which an embodiment of the present disclosure is applicable;
FIG. 5 is a schematic structural diagram of an interaction apparatus according to an embodiment of the present disclosure; and
FIG. 6 is a schematic structural diagram of an electronic device according to an embodiment of the present disclosure.

### DETAILED DESCRIPTION OF EMBODIMENTS

Embodiments of the present disclosure are described in more detail below with reference to the accompanying drawings. Although some embodiments of the present disclosure are shown in the drawings, it should be understood that the present disclosure may be implemented in various forms and should not be construed as being limited to the embodiments set forth herein. Rather, these embodiments are provided for a more thorough and complete understanding of the present disclosure. It should be understood that the drawings and the embodiments of the present disclosure are merely used as examples, and are not intended to limit the scope of protection of the present disclosure.

It should be understood that the various steps described in the method implementations of the present disclosure may be performed in different orders, and/or performed in parallel. Furthermore, additional steps may be included and/or the execution of the illustrated steps may be omitted in the method implementations. The scope of the present disclosure is not limited in this respect.

The term "include" and variants thereof used herein indicate open inclusion, that is, "include but are not limited to". The term "based on" is "at least partially based on". The term "an embodiment" means "at least one embodiment". The term "another embodiment" means "at least one another embodiment". The term "some embodiments" means "at least some embodiments". Related definitions of the other terms will be given in the description below.

It should be noted that concepts such as "first" and "second" mentioned in the present disclosure are only used for distinguishing different apparatuses, modules, or units, and are not used for limiting the sequence of functions performed by these apparatuses, modules, or units or interdependence.

It should be noted that the modifiers "one" and "a plurality of" mentioned in the present disclosure are illustrative and not restrictive, and those skilled in the art should understand that unless the context clearly indicates otherwise, the modifiers should be understood as "one or more".

The names of messages or information exchanged between a plurality of apparatuses in the implementations of the present disclosure are used for illustrative purposes only, and are not used for limiting the scope of these messages or information.

It can be understood that before the use of the technical solutions disclosed in the embodiments of the present disclosure, the user shall be informed of the type, range of use, use scenarios, etc., of personal information involved in the present disclosure in an appropriate manner in accordance with the relevant laws and regulations, and the authorization of the user shall be obtained.

For example, in response to reception of an active request from the user, prompt information is sent to the user to clearly inform the user that a requested operation will require access to and use of the personal information of the user. As such, the user can independently choose, based on the prompt information, whether to provide the personal information to software or hardware, such as an electronic device, an application, a server, or a storage medium, that performs operations in the technical solutions of the present disclosure.

As an alternative but non-limiting implementation, in response to the reception of the active request from the user, the prompt information may be sent to the user in the form of, for example, a pop-up window, in which the prompt information may be presented in text. Furthermore, the pop-up window may further include a selection control for the user to choose whether to "agree" or "disagree" to provide the personal information to the electronic device.

It can be understood that the above-mentioned process of notifying and obtaining the authorization of the user is only illustrative and does not constitute a limitation on the implementations of the present disclosure, and other manners that satisfy the relevant laws and regulations may also be applied in the implementations of the present disclosure.

It can be understood that the data involved in the technical solutions (including, but not limited to, the data itself and the access to or use of the data) shall comply with the requirements of corresponding laws, regulations, and relevant provisions.

With the rapid development of the Internet, people's consumption patterns have evolved beyond real-time offline consumption. An increasing number of people choose to obtain resource objects such as various group-buying coupons online, and then use them offline or send them to others for use. However, in a process of gifting resource objects such as various group-buying coupons, these resource objects need to be obtained online and then sent to a recipient. The recipient needs to receive the gift before using it offline. In this gifting process, a series of operations, such as searching, obtaining, and sending, need to be performed. The recipient also needs to perform a series of operations, such as receiving, saving, and using. These operational procedures are cumbersome, with problems such as a lengthy process chain and an inefficient gifting workflow, which is prone to errors or delays and consequently affects a gifting effect and user experience.

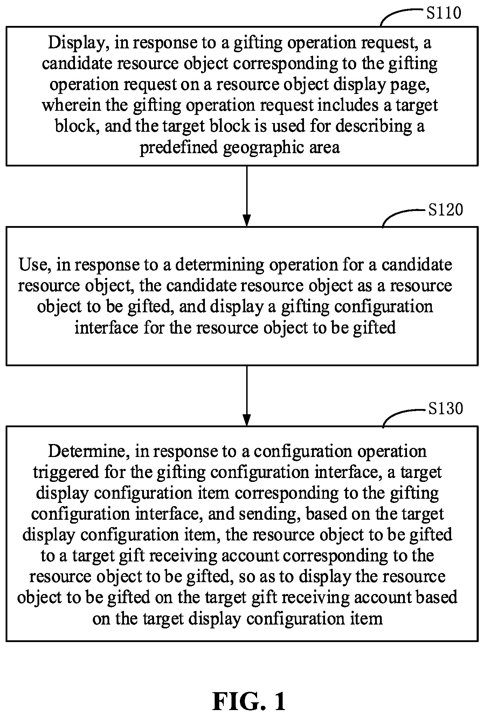

FIG. 1 is a schematic flowchart of an interaction method according to an embodiment of the present disclosure. This embodiment of the present disclosure is applicable to a scenario where a user gifts resource objects such as various group-buying coupons to a recipient online. The method may be performed by an interaction apparatus. The apparatus may be implemented in the form of software and/or hardware. Optionally, the apparatus is implemented by an electronic device. The electronic device may be a mobile terminal, a PC, a server, etc.

As shown in FIG. 1, the method includes the following steps.

S110: Display, in response to a gifting operation request, a candidate resource object corresponding to the gifting operation request on a resource object display page, where the gifting operation request includes a target block, and the target block is used for describing a predefined geographic area.

The resource object display page includes resource object description information corresponding to a plurality of candidate resource objects. The resource object display page may be used for displaying a plurality of candidate resource objects that may be sent to a target gift receiving account.

Specifically, after the resource object display page is opened, filtering may be performed in an area where the target gift receiving account is located and a range at a specific distance from the target gift receiving account on the resource object display page, to display a plurality of candidate resource objects and resource object description information corresponding to the candidate resource objects.

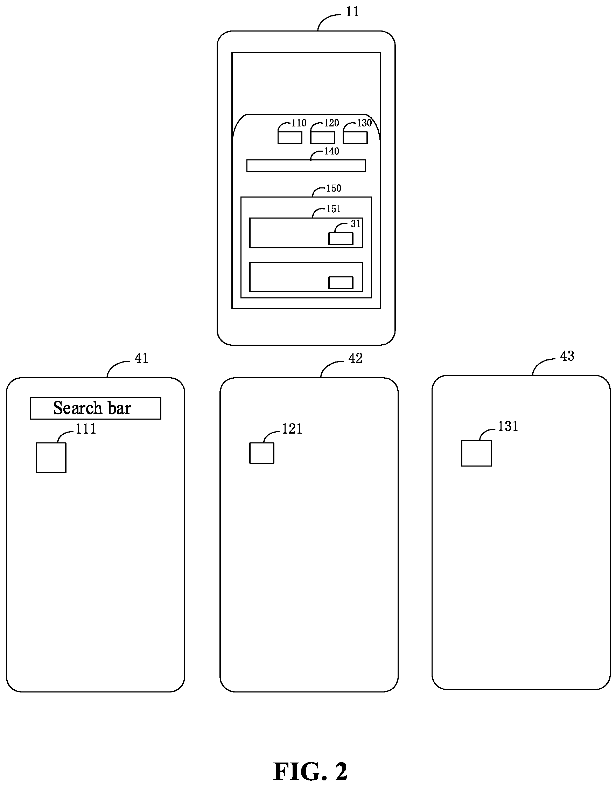

For example, a resource object filter configuration item 110 and/or a resource object filter configuration item 120 on a resource object display page 11 in FIG. 2 is tapped for filtering in a defined geographic range, to display a plurality of candidate resource objects.

Optionally, a plurality of resource object filter configuration items are included on the resource object display page. The method further includes steps A1 and A2.

Step A1: Display, in response to a trigger operation for a resource object filter configuration item, a resource object filter configuration interface for resource filtering, where the resource object filter configuration interface includes a plurality of candidate blocks for defining a resource object filter range, and the candidate block is used for describing a candidate geographic area.

The candidate geographic area includes a first-level geographic area and a second-level geographic area, and the second-level geographic area is a geographic sub-area divided from the first-level geographic area. For example, as shown in FIG. 2, a resource object filter configuration interface 41 includes a plurality of candidate blocks 111 for defining a resource object filter range to describe the first-level geographic area, and a resource object filter configuration interface 42 includes a plurality of candidate blocks 121 for defining a resource object filter range to describe the second-level geographic area.

For example, as shown in FIG. 2, the resource object filter configuration item 110 or the resource object filter configuration item 120 on the resource object display page 11 is clicked, to display the resource object filter configuration interface 41 or the resource object filter configuration interface 42 used for resource filtering, where the resource object filter configuration interface 41 includes the plurality of candidate blocks 111 for defining the resource object filter range, and the resource object filter configuration interface 42 includes the plurality of candidate blocks 121 for defining the resource object filter range.

Optionally, the trigger operation for a resource object filter configuration item is specifically: a trigger operation for a corresponding identifier of a candidate filter configuration item included in a resource object filter configuration area, for example, tapping the candidate filter configuration item 110 in FIG. 2.

Step A2: Determine, in response to a determining operation for a candidate block on the resource object filter configuration interface, a target block corresponding to the gifting operation request, so as to display the candidate resource object corresponding to the gifting operation request on the resource object display page after responding to the gifting operation request.

Specifically, the determining operation for a candidate block on the resource object filter configuration interface is specifically: a trigger operation for a corresponding identifier of the candidate block on the resource object filter configuration interface, for example, tapping one of the candidate blocks 111 on the resource object filter configuration interface 41 in FIG. 2 as a target block, so as to display the candidate resource object corresponding to the gifting operation request on the resource object display page after responding to the gifting operation request.

For example, after the resource object filter configuration item 110 is tapped to display the resource object filter configuration interface 41 in FIG. 2, the plurality of candidate blocks 111 in the resource object filter configuration interface 41 are filtered to select a target block suitable for the target gift receiving account. The resource object display page 11 is displayed after determination. In addition, if the target gift receiving account and a sending object are at the same geographic location, after the filtering is completed in the first-level geographic area, a filter item "Nearby" is displayed on the resource object filter configuration interface 42 for further filtering of the candidate resource objects when filtering is further performed in the second-level area. If the target gift receiving account is in a non-local city, after the filtering is completed in the first-level geographic area, the filter item "Nearby" is replaced with a filter item like "Business District" for filtering in a range on the displayed resource object filter configuration interface 42 when filtering is further performed in the second-level area, so as to perform further filtering of the candidate resource objects. In this way, accurate filtering of the candidate resource objects can be implemented.

In the present application, the resource object filter configuration interface for resource filtering is displayed in response to the trigger operation for a resource object filter configuration item, and further the target block corresponding to the gifting operation request is determined in response to the determining operation for the candidate block on the resource object filter configuration interface. In this way, the geographic location corresponding to the target gift receiving account can be accurately determined, and thus the candidate resource object corresponding to the gifting operation request can be accurately displayed on the resource object display page after responding to the gifting operation request, thereby avoiding a gift selection error caused by an incorrect geographic location.

Optionally, the resource object display page includes a resource object sorting configuration item, and displaying the candidate resource object corresponding to the gifting operation request on the resource object display page includes:
displaying, in response to a trigger operation for a resource object sorting configuration item, a resource object sorting configuration interface corresponding to the resource object sorting configuration item, where the resource object sorting configuration interface includes a plurality of candidate sorting display modes for defining a resource object sorting effect; and
determining, in response to a determining operation for a candidate sorting display mode, a target sorting display mode used for the candidate resource object corresponding to the gifting operation request that is displayed on the resource object display page, and displaying the candidate resource object corresponding to the gifting operation request on the resource object display page in the target sorting display mode.

The target sorting display mode includes at least one of the following: a sorting display mode based on demand volumes of resource objects, a sorting display mode based on view counts of the resource objects, a sorting display mode based on distances of the resource objects, or a sorting display mode based on values of value attributes of the resource objects.

For example, as shown in FIG. 2, the resource object display page 11 includes a resource object sorting configuration item 130. After the resource object sorting configuration item 130 is tapped, a resource object sorting configuration interface 43 is displayed, and then filtering is performed in an area 131 in the resource object sorting configuration interface 43 in a target sorting display mode, so as to display the candidate resource object corresponding to the gifting operation request on the resource object display page.

Optionally, the resource object display page includes a plurality of pieces of candidate category information, where the plurality of pieces of candidate category information are distributed in a resource object category selection configuration area, and displaying the candidate resource object corresponding to the gifting operation request on the resource object display page includes: determining, in response to a determining operation for a piece of candidate category information, target category information corresponding to the gifting operation request, and displaying, on the resource object display page, the candidate resource object corresponding to the gifting operation request that belongs to the target category information. For example, as shown in FIG. 2, the resource object category selection configuration area 140 includes a plurality of pieces of candidate category information. The candidate category information is categories of resource objects that may be sent to the target gift receiving account, such as hot pot, fruit, dessert, etc. When corresponding candidate category information is tapped, a resource object display page including a resource object corresponding to a target category is displayed.

Optionally, at least one of the resource object filter configuration item, the resource object sorting configuration item, and the plurality of pieces of candidate category information may be selected for filtering to obtain a candidate resource object suitable for the target gift receiving account and display the candidate resource object on the resource object display page, so that a resource object to be gifted can be selected from the resource object display page.

S120: Use, in response to a determining operation for a candidate resource object, the candidate resource object as a resource object to be gifted, and display a gifting configuration interface for the resource object to be gifted.

The gifting configuration interface includes a plurality of candidate display configuration items corresponding to the resource object to be gifted, and the plurality of candidate display configuration items include at least one of the following types of information: at least one piece of candidate packaging configuration information, first description information of the resource object to be gifted, and at least one piece of candidate gift receiving account information. The first description information may be resource object description information for describing a category, value, etc. of the resource object to be gifted.

At least one piece of candidate packaging configuration information corresponding to the plurality of candidate display configuration items includes at least one piece of cover pattern content configurable for the resource object to be gifted, input text content configurable for the resource object to be gifted, and animation content corresponding to the cover pattern content.

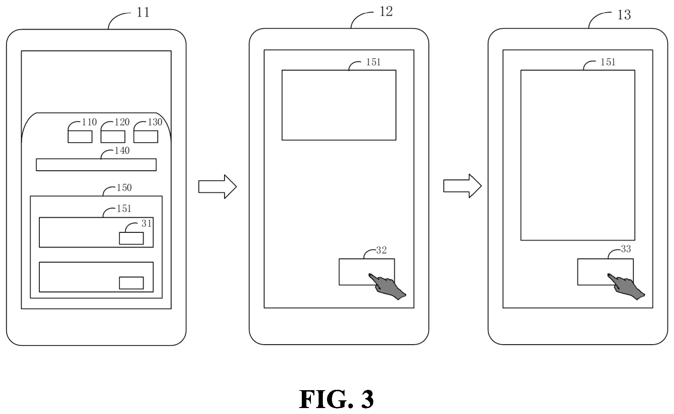

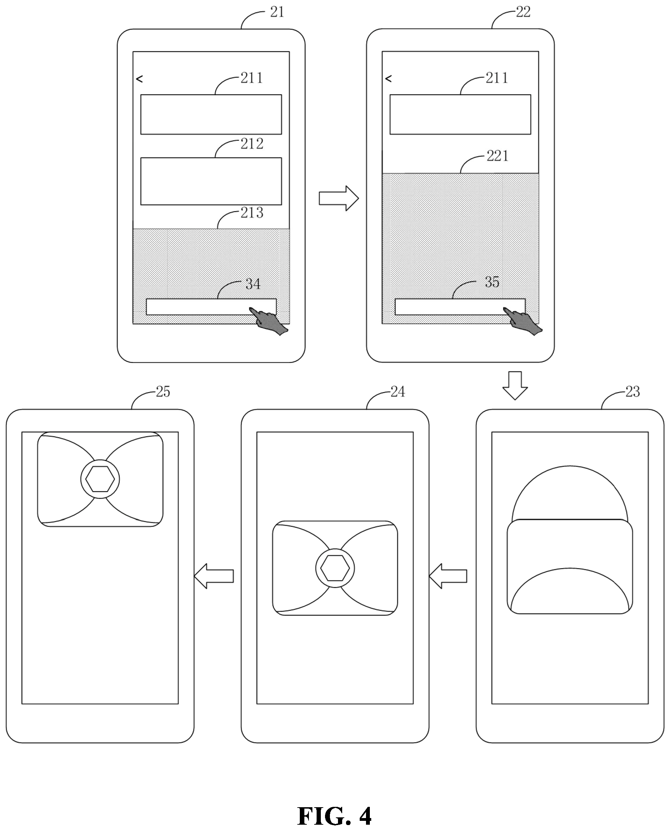

Specifically, one of the candidate resource objects is selected as the resource object to be gifted on the resource object display page, and it is determined to gift the resource object to be gifted, which responds to the determining operation for a candidate resource object. Then, the gifting configuration interface for the resource object to be gifted is displayed. For example, as shown in FIG. 3, tapping 31 on the resource object display page 11 navigates to a resource object to be gifted detail page 12. On the resource object to be gifted detail page 12, an area 151 includes a resource object to be gifted and first description information of the resource object to be gifted. 32 may be used for determining to gift, that is, tapping 32 navigates to a page 13, and tapping 33 on the page 13 navigates to a gifting configuration interface 21 in FIG. 4.

Optionally, displaying the gifting configuration interface for the resource object to be gifted includes steps B1 and B2.

Step B1: Display a resource object to be gifted detail page corresponding to the resource object to be gifted, where the resource object to be gifted detail page includes second description information of the resource object to be gifted, and the number of pieces of information in the second description information is greater than that in the first description information.

The resource object to be gifted detail page is a page for displaying the resource object to be gifted and the second description information of the resource object to be gifted, and determining to gift the resource object to be gifted.

For example, as shown in FIG. 3, tapping 31 on the resource object display page 11 navigates to a resource object to be gifted detail page 12. On the resource object to be gifted detail page 12, an area 151 includes a resource object to be gifted and second description information of the resource object to be gifted.

Step B2: Display the gifting configuration interface for the resource object to be gifted in response to obtaining a target permission for the resource object to be gifted on the resource object to be gifted detail page and triggering a determining operation for a gifting configuration, where the target permission is used for controlling a usage state of the resource object to be gifted.

Specifically, a permission configuration interface for the resource object to be gifted is displayed in response to obtaining the target permission for the resource object to be gifted on the resource object to be gifted detail page and triggering the determining operation for the gifting configuration, and the target permission for the resource object to be gifted is obtained and the gifting configuration interface for the resource object to be gifted is displayed, in response to a configuration operation triggered for the permission configuration interface for the resource object to be gifted.

For example, as shown in FIG. 3 and FIG. 4, the process of displaying the gifting configuration interface for the resource object to be gifted in response to obtaining the target permission for the resource object to be gifted on the resource object to be gifted detail page and triggering the determining operation for the gifting configuration is:
tapping 32 on the target resource object detail page 12 to navigate to the permission configuration page 13, and then tapping 33 on the permission configuration page 13, that is, in response to the configuration operation triggered for the permission configuration interface for the resource object to be gifted, finally determining to gift the resource object to be gifted to the target gift receiving account, and then navigating to the gifting configuration interface 21, to perform operations of a subsequent gifting process on the gifting configuration interface 21.

According to the present technical solution, after the resource object to be gifted detail page corresponding to the resource object to be gifted is displayed, the gifting configuration interface for the resource object to be gifted is displayed in response to obtaining the target permission for the resource object to be gifted on the resource object to be gifted detail page and triggering the determining operation for the gifting configuration. In this process, there is no need to display a purchase success page, but directly navigate to the gifting configuration interface, thereby quickly integrating with a gifting process, and simplifying a process chain.

S130: Determine, in response to a configuration operation triggered for the gifting configuration interface, a target display configuration item corresponding to the gifting configuration interface, and sending, based on the target display configuration item, the resource object to be gifted to a target gift receiving account corresponding to the resource object to be gifted, so as to display the resource object to be gifted on the target gift receiving account based on the target display configuration item.

The target display configuration item includes target packaging configuration information corresponding to the resource object to be gifted and the target gift receiving account corresponding to the resource object to be gifted. The target packaging configuration information includes text content, a candidate cover pattern, and the resource object to be gifted. For example, taking FIG. 4 as an example, a text editing configuration area 211 displays the text content and the candidate cover pattern, an area 212 displays the resource object to be gifted and second description information of the resource object to be gifted, a candidate cover pattern is selected in a cover configuration area 213, and a target gift receiving account is selected in an area 221.

Optionally, determining, in response to the configuration operation triggered for the gifting configuration interface, the target display configuration item corresponding to the gifting configuration interface includes: determining, in response to a configuration operation of inputting text content on the gifting configuration interface for the resource object to be gifted, input text content input through the configuration operation as the target packaging configuration information corresponding to the resource object to be gifted.

For example, as shown in FIG. 4, the text editing configuration area 211 in the gifting configuration interface 21 is used for editing text content edited and input for the resource object to be gifted, such as a blessing. That is, a text configuration operation is performed in the text editing configuration area 211.

Optionally, the gifting configuration interface for the resource object to be gifted includes a plurality of candidate cover patterns, and determining, in response to the configuration operation triggered for the gifting configuration interface, the target display configuration item corresponding to the gifting configuration interface includes: determining, in response to a configuration operation of selecting a candidate cover pattern in the gifting configuration interface for the resource object to be gifted, the candidate cover pattern selected through the configuration operation as the target packaging configuration information corresponding to the resource object to be gifted.

For example, as shown in FIG. 4, the cover configuration area 213 in the gifting configuration interface 21 is used for changing cover pattern content selected and configured for the resource object to be gifted. That is, a candidate cover pattern is configured in the cover configuration area 213.

Optionally, the gifting configuration interface for the resource object to be gifted includes a plurality of pieces of candidate gift receiving account information, and determining, in response to the configuration operation triggered for the gifting configuration interface, the target display configuration item corresponding to the gifting configuration interface includes: determining, in response to a configuration operation of selecting a piece of candidate gift receiving account information on the gifting configuration interface for the resource object to be gifted, the candidate gift receiving account information selected through the configuration operation as the target gift receiving account corresponding to the resource object to be gifted.

The candidate gift receiving account information is a selection trigger control corresponding to a candidate gift receiving account or a candidate gift receiving account. The selection of the target gift receiving account may be understood as selecting a friend as a recipient.

Specifically, in response to triggering a first operation of selecting candidate gift receiving account information on the gifting configuration interface, a to-be-gifted object configuration area is displayed on the gifting configuration interface, where the to-be-gifted object configuration area includes at least one piece of candidate gift receiving account information. For example, taking FIG. 4 as an example, when 34 in the gifting configuration interface 21 is tapped, the area 213 slides up to transition into the area 221, namely a to-be-gifted object configuration area 221, in a page 22.

Optionally, after determining the candidate gift receiving account information selected through the configuration operation as the target gift receiving account corresponding to the resource object to be gifted, the method further includes: hiding, in response to a hiding operation triggered for the candidate gift receiving account information on the gifting configuration interface for the resource object to be gifted, the plurality of pieces of candidate gift receiving account information displayed on the gifting configuration interface for the resource object to be gifted, and redisplaying the plurality of candidate cover patterns on the gifting configuration interface for the resource object to be gifted, so as to select the candidate cover pattern in the gifting configuration interface for the resource object to be gifted. Taking FIG. 4 as an example, the to-be-gifted object configuration area 221 and the cover configuration area 213 can be switched to each other. If the to-be-gifted object configuration area 221 is switched back to the cover configuration area 213, a selected target gift receiving account is retained. When the cover configuration area 213 is switched back to the to-be-gifted object configuration area 221 again, the previously selected target gift receiving account is automatically selected. The target gift receiving account may be changed again if needed. This implements rapid determination of the target gift receiving account and change of cover content.

Optionally, sending the resource object to be gifted to the target gift receiving account corresponding to the resource object to be gifted based on the target display configuration item includes: sending, in response to a sending operation for the resource object to be gifted that is triggered for the gifting configuration interface for the resource object to be gifted, the resource object to be gifted displayed on the gifting configuration interface for the resource object to be gifted to the target gift receiving account corresponding to the resource object to be gifted based on the target display configuration item. For example, taking FIG. 4 as an example, after the target gift receiving account selected in the to-be-gifted object configuration area is determined on the page 22, clicking 35 triggers packaging and sending of the resource object to be gifted to the target gift receiving account in response to the sending operation for the resource object to be gifted that is triggered for the gifting configuration interface for the resource object to be gifted.

Optionally, sending the resource object to be gifted to the target gift receiving account corresponding to the resource object to be gifted based on the target display configuration item includes a process of packaging and sending the resource object to be gifted to the target gift receiving account. The process is as follows:
playing a packaging animation corresponding to the resource object to be gifted on the gifting configuration interface for the resource object to be gifted based on the target display configuration item, and after playing the packaging animation corresponding to the resource object to be gifted, moving a packaged resource object to be gifted from a side of a first direction to a side of a second direction on the gifting configuration interface for the resource object to be gifted until it is no longer displayed, so as to send the resource object to be gifted to the target gift receiving account corresponding to the resource object to be gifted, where the first direction and the second direction are different or opposite directions.

For example, as shown in FIG. 4, after 35 is tapped, a packaging and sending operation is started. That is, a page 23 is displayed, the packaging animation corresponding to the resource object to be gifted is played on the page 23, and a page 24 is displayed after the packaging animation corresponding to the resource object to be gifted is played. A page 25 displays moving the packaged resource object to be gifted from the side of the first direction to the side of the second direction on the gifting configuration interface for the resource object to be gifted until it is no longer displayed, and finally displays a gifting success page.

According to the embodiments of the present disclosure, the candidate resource object corresponding to the gifting operation request is displayed on the resource object display page in response to the gifting operation request; a candidate resource object is used as the resource object to be gifted in response to the determining operation for the candidate resource object, and the gifting configuration interface for the resource object to be gifted is displayed; and the target display configuration item corresponding to the gifting configuration interface is determined in response to the configuration operation triggered for the gifting configuration interface, and the resource object to be gifted is sent to the target gift receiving account corresponding to the resource object to be gifted based on the target display configuration item, so as to display the resource object to be gifted on the target gift receiving account based on the target display configuration item. According to the technical solution of the present application, the gifting configuration interface for the resource object to be gifted is displayed after it is determined to use a candidate resource object as the resource object to be gifted, and the resource object to be gifted is sent to the target gift receiving account corresponding to the resource object to be gifted after the target display configuration item is determined on the gifting configuration interface. This solves problems such as a lengthy gifting process chain and an inefficient gifting workflow.

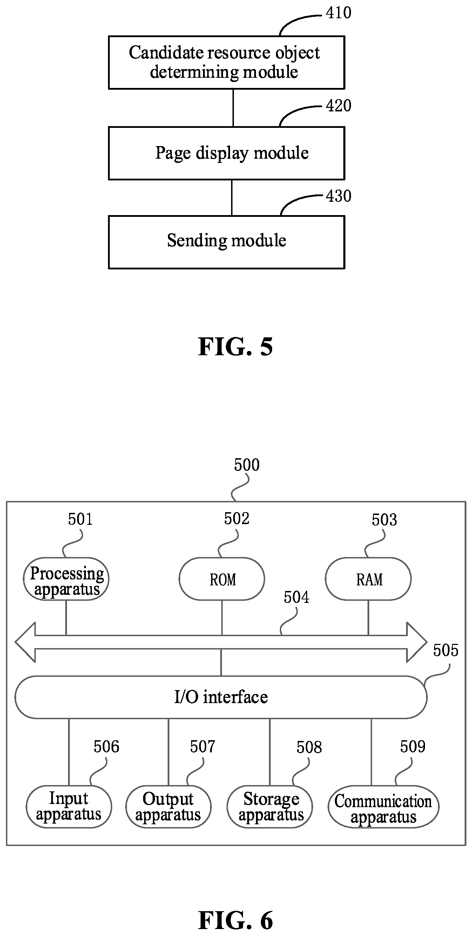

FIG. 5 is a schematic structural diagram of an interaction apparatus according to an embodiment of the present disclosure. As shown in FIG. 5, the apparatus includes: a candidate resource object determining module 410, a page display module 420, and a sending module 430.

The candidate resource object determining module 410 is configured to display, in response to a gifting operation request, a candidate resource object corresponding to the gifting operation request on a resource object display page. The gifting operation request includes a target block, and the target block is used for describing a predefined geographic area.

The page display module 420 is configured to use, in response to a determining operation for a candidate resource object, the candidate resource object as a resource object to be gifted, and display a gifting configuration interface for the resource object to be gifted. The gifting configuration interface includes a plurality of candidate display configuration items corresponding to the resource object to be gifted, and the plurality of candidate display configuration items include at least one of the following types of information: at least one piece of candidate packaging configuration information, first description information of the resource object to be gifted, and at least one piece of candidate gift receiving account information.

The sending module 430 is configured to determine, in response to a configuration operation triggered for the gifting configuration interface, a target display configuration item corresponding to the gifting configuration interface, and send, based on the target display configuration item, the resource object to be gifted to a target gift receiving account corresponding to the resource object to be gifted, so as to display the resource object to be gifted on the target gift receiving account based on the target display configuration item. The target display configuration item includes target packaging configuration information corresponding to the resource object to be gifted and the target gift receiving account corresponding to the resource object to be gifted.

Optionally, the resource object display page includes a plurality of resource object filter configuration items, and the candidate resource object determining module includes a target block determining unit configured to:
display, in response to a trigger operation for a resource object filter configuration item, a resource object filter configuration interface for resource filtering, where the resource object filter configuration interface includes a plurality of candidate blocks for defining a resource object filter range, and the candidate block is used for describing a candidate geographic area; and
determine, in response to a determining operation for a candidate block on the resource object filter configuration interface, a target block corresponding to the gifting operation request, so as to display the candidate resource object corresponding to the gifting operation request on the resource object display page after responding to the gifting operation request.

Optionally, the trigger operation for a resource object filter configuration item is specifically a trigger operation for a corresponding identifier of a candidate filter configuration item included in the resource object filter configuration area. The determining operation for a candidate block on the resource object filter configuration interface is specifically a trigger operation for a corresponding identifier of the candidate block on the resource object filter configuration interface. The candidate geographic area includes a first-level geographic area and a second-level geographic area, and the second-level geographic area is a geographic sub-area divided from the first-level geographic area.

Optionally, the resource object display page includes a resource object sorting configuration item, and the candidate resource object determining module includes a target sorting display mode determining unit configured to:
display, in response to a trigger operation for a resource object sorting configuration item, a resource object sorting configuration interface corresponding to the resource object sorting configuration item, where the resource object sorting configuration interface includes a plurality of candidate sorting display modes for defining a resource object sorting effect; and
determine, in response to a determining operation for a candidate sorting display mode, a target sorting display mode used for the candidate resource object corresponding to the gifting operation request that is displayed on the resource object display page, and display the candidate resource object corresponding to the gifting operation request on the resource object display page in the target sorting display mode. The target sorting display mode includes at least one of the following: a sorting display mode based on demand volumes of resource objects, a sorting display mode based on view counts of the resource objects, a sorting display mode based on distances of the resource objects, or a sorting display mode based on values of value attributes of the resource objects;
and/or the resource object display page includes a plurality of pieces of candidate category information, and the candidate resource object determining module includes a target category information determining unit configured to:
   determine, in response to a determining operation for a piece of candidate category information, target category information corresponding to the gifting operation request, and display, on the resource object display page, the candidate resource object corresponding to the gifting operation request that belongs to the target category information.

Optionally, the page display module includes a gifting configuration interface display unit configured to:
display a resource object to be gifted detail page corresponding to the resource object to be gifted, where the resource object to be gifted detail page includes second description information of the resource object to be gifted, and the number of pieces of information in the second description information is greater than that in the first description information; and
display the gifting configuration interface for the resource object to be gifted in response to obtaining a target permission for the resource object to be gifted on the resource object to be gifted detail page and triggering a determining operation for a gifting configuration, where the target permission is used for controlling a usage state of the resource object to be gifted.

Optionally, the gifting configuration interface display unit is further configured to:
display a permission configuration interface for the resource object to be gifted in response to obtaining the target permission for the resource object to be gifted on the resource object to be gifted detail page and triggering the determining operation for the gifting configuration; and
obtain the target permission for the resource object to be gifted and display the gifting configuration interface for the resource object to be gifted, in response to a configuration operation triggered for the permission configuration interface for the resource object to be gifted.

Optionally, at least one piece of candidate packaging configuration information corresponding to the plurality of candidate display configuration items includes at least one piece of cover pattern content configurable for the resource object to be gifted, input text content configurable for the resource object to be gifted, and animation content corresponding to the cover pattern content.

Optionally, the sending module includes a target packaging configuration information determining unit configured to:
determine, in response to a configuration operation of inputting text content on the gifting configuration interface for the resource object to be gifted, input text content input through the configuration operation as the target packaging configuration information corresponding to the resource object to be gifted;
and/or the gifting configuration interface for the resource object to be gifted includes a plurality of candidate cover patterns. The sending module includes a target packaging configuration information determining unit configured to:
   determine, in response to a configuration operation of selecting a candidate cover pattern in the gifting configuration interface for the resource object to be gifted, the candidate cover pattern selected through the configuration operation as the target packaging configuration information corresponding to the resource object to be gifted;
   and/or the gifting configuration interface for the resource object to be gifted includes a plurality of pieces of candidate gift receiving account information. The sending module includes a target gift receiving account determining unit configured to:
      determine, in response to a configuration operation of selecting a piece of candidate gift receiving account information in the gifting configuration interface for the resource object to be gifted, the candidate gift receiving account information selected through the configuration operation as the target gift receiving account corresponding to the resource object to be gifted;
      and/or after determining the candidate gift receiving account information selected through the configuration operation as the target gift receiving account corresponding to the resource object to be gifted,
      hide, in response to a hiding operation triggered for the candidate gift receiving account information on the gifting configuration interface for the resource object to be gifted, the plurality of pieces of candidate gift receiving account information displayed on the gifting configuration interface for the resource object to be gifted, and redisplay the plurality of candidate cover patterns on the gifting configuration interface for the resource object to be gifted, so as to select the candidate cover pattern in the gifting configuration interface for the resource object to be gifted.

The candidate gift receiving account information is a selection trigger control corresponding to a candidate gift receiving account or a candidate gift receiving account.

Optionally, the sending module includes a target gift receiving account sending unit configured to:
send, in response to a sending operation for the resource object to be gifted that is triggered for the gifting configuration interface for the resource object to be gifted, the resource object to be gifted displayed on the gifting configuration interface for the resource object to be gifted to the target gift receiving account corresponding to the resource object to be gifted based on the target display configuration item;
and/or the sending module includes a packaging unit configured to:
   play a packaging animation corresponding to the resource object to be gifted on the gifting configuration interface for the resource object to be gifted based on the target display configuration item; and
   after playing the packaging animation corresponding to the resource object to be gifted, move a packaged resource object to be gifted from a side of a first direction to a side of a second direction on the gifting configuration interface for the resource object to be gifted until it is no longer displayed, so as to send the resource object to be gifted to the target gift receiving account corresponding to the resource object to be gifted, where the first direction and the second direction are different or opposite directions.

The interaction apparatus provided in this embodiment of the present disclosure may perform the interaction method provided in any embodiment of the present disclosure, and has corresponding functional modules for performing the method and beneficial effects.

It should be noted that the units and modules included in the above-mentioned apparatus are obtained through division merely according to functional logic, but are not limited to the above-mentioned division, as long as corresponding functions can be implemented. In addition, specific names of the functional units are merely used for mutual distinguishing, and are not used for limiting the scope of protection of the embodiments of the present disclosure.

FIG. 6 is a schematic structural diagram of an electronic device according to an embodiment of the present disclosure. Reference is made to FIG. 6 below, which is a schematic structural diagram of an electronic device (such as a terminal device or a server in FIG. 6) 500 suitable for implementing embodiments of the present disclosure. A terminal device in this embodiment of the present disclosure may include, but is not limited to, mobile terminals such as a mobile phone, a notebook computer, a digital broadcast receiver, a personal digital assistant (PDA), a PAD (tablet computer), a portable multimedia player (PMP), and a vehicle-mounted terminal (e.g., a vehicle navigation terminal), and fixed terminals such as a digital TV and a desktop computer. The electronic device shown in FIG. 6 is merely an example, and shall not impose any limitation on the function and scope of use of the embodiments of the present disclosure.

As shown in FIG. 6, the electronic device 500 may include a processing apparatus (for example, a central processing unit or a graphics processing unit) 501 that may perform a variety of appropriate actions and processing in accordance with a program stored in a read-only memory (ROM) 502 or a program loaded from a storage apparatus 508 into a random-access memory (RAM) 503. The RAM 503 further stores various programs and data required for the operation of the electronic device 500. The processing apparatus 501, the ROM 502, and the RAM 503 are connected to one another through a bus 504. An input/output (I/O) interface 505 is also connected to the bus 504.

Generally, the following apparatuses may be connected to the I/O interface 505: an input apparatus 506 including, for example, a touchscreen, a touchpad, a keyboard, a mouse, a camera, a microphone, an accelerometer, and a gyroscope; an output apparatus 507 including, for example, a liquid crystal display (LCD), a speaker, and a vibrator; the storage apparatus 508 including, for example, a magnetic tape and a hard disk drive; and a communication apparatus 509. The communication apparatus 509 may allow the electronic device 500 to perform wireless or wired communication with other devices to exchange data. Although FIG. 6 shows the electronic device 500 having various apparatuses, it should be understood that it is not required to implement or have all of the shown apparatuses. It may be an alternative to implement or have more or fewer apparatuses.

In particular, according to the embodiments of the present disclosure, the process described above with reference to the flowchart may be implemented as a computer software program. For example, an embodiment of the present disclosure includes a computer program product, which includes a computer program carried on a non-transitory computer-readable medium, where the computer program includes program code for performing the method shown in the flowchart. In such an embodiment, the computer program may be downloaded and installed from a network through the communication apparatus 509, installed from the storage apparatus 508, or installed from the ROM 502. When the computer program is executed by the processing apparatus 501, the above-mentioned functions defined in the method of the embodiments of the present disclosure are performed.

The names of messages or information exchanged between a plurality of apparatuses in the implementations of the present disclosure are used for illustrative purposes only, and are not used for limiting the scope of these messages or information.

The electronic device provided in this embodiment of the present disclosure and the interaction method provided in the above-mentioned embodiments belong to the same inventive concept. For the technical details not exhaustively described in this embodiment, reference may be made to the above-mentioned embodiments, and this embodiment and the above-mentioned embodiments have the same beneficial effects.

An embodiment of the present disclosure provides a computer storage medium having a computer program stored therein that, when executed by a processor, causes the interaction method provided in the above-mentioned embodiments to be implemented.

It should be noted that the above-mentioned computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk drive, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), and the like, or any suitable combination thereof.

In some implementations, a client and a server may communicate using any currently known or future-developed network protocol such as the hypertext transfer protocol (HTTP), and may be connected to digital data communication (for example, a communication network) in any form or medium. Examples of the communication network include a local area network ("LAN"), a wide area network ("WAN"), an internetwork (for example, the Internet), a peer-to-peer network (for example, an ad hoc peer-to-peer network), and any currently known or future-developed network.

The above-mentioned computer-readable medium may be included in the above-mentioned electronic device. Alternatively, the computer-readable medium may exist independently, without being assembled into the electronic device.

The computer-readable medium carries one or more programs that, when executed by the electronic device, cause the electronic device to: display a resource object display page, where the resource object display page includes resource object description information corresponding to a plurality of candidate resource objects; display a target resource object detail page corresponding to the target resource object in response to a first operation for selecting a target resource object on the resource object display page; display a target resource object gifting page corresponding to the target resource object in response to a second operation for the target resource object on the target resource object detail page, where the second operation is an operation for obtaining a target permission for the target resource object and triggering gifting, the target permission is used for controlling a usage state of the target resource object, and the target resource object gifting page includes resource object description information corresponding to the target resource object; and send the target resource object displayed on the target resource object gifting page to a recipient object.

Computer program code for performing operations of the present disclosure can be written in one or more programming languages or a combination thereof, where the programming languages include but are not limited to object-oriented programming languages, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user through any kind of network, including a local area network (LAN) or a wide area network (WAN), or may be connected to an external computer (for example, connected through the Internet with an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. Names of the units do not constitute a limitation on the units themselves in some cases, for example, a first obtaining unit may alternatively be described as "a unit for obtaining at least two internet protocol addresses".

The functions described herein above may be performed at least partially by one or more hardware logic components. For example, without limitation, example types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk drive, a random access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

The above-mentioned descriptions are merely preferred embodiments of the present disclosure and explanations of the applied technical principles. Those skilled in the art should understand that the scope of disclosure involved in the present disclosure is not limited to the technical solutions formed by specific combinations of the above-mentioned technical features, and shall also cover other technical solutions formed by any combination of the above-mentioned technical features or equivalent features thereof without departing from the above-mentioned disclosed concept. For example, a technical solution formed by a replacement of the above-mentioned features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the above-mentioned discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely example forms of implementing the claims.

## Claims

1. An interaction method, comprising:
displaying, in response to a gifting operation request, a candidate resource object corresponding to the gifting operation request on a resource object display page, wherein the gifting operation request comprises a target block, and the target block is used for describing a predefined geographic area;
using, in response to a determining operation for a candidate resource object, the candidate resource object as a resource object to be gifted, and displaying a gifting configuration interface for the resource object to be gifted, the gifting configuration interface comprising a plurality of candidate display configuration items corresponding to the resource object to be gifted, and the plurality of candidate display configuration items comprising at least one of the following types of information: at least one piece of candidate packaging configuration information, first description information of the resource object to be gifted, and at least one piece of candidate gift receiving account information; and
determining, in response to a configuration operation triggered for the gifting configuration interface, a target display configuration item corresponding to the gifting configuration interface, and sending, based on the target display configuration item, the resource object to be gifted to a target gift receiving account corresponding to the resource object to be gifted, so as to display the resource object to be gifted on the target gift receiving account based on the target display configuration item, the target display configuration item comprising target packaging configuration information corresponding to the resource object to be gifted and the target gift receiving account corresponding to the resource object to be gifted.

2. The method according to claim 1, wherein the resource object display page comprises a plurality of resource object filter configuration items, and the method further comprises:
displaying, in response to a trigger operation for a resource object filter configuration item, a resource object filter configuration interface for resource filtering, the resource object filter configuration interface comprising a plurality of candidate blocks for defining a resource object filter range, and the candidate block being used for describing a candidate geographic area; and
determining, in response to a determining operation for a candidate block on the resource object filter configuration interface, a target block corresponding to the gifting operation request, so as to display the candidate resource object corresponding to the gifting operation request on the resource object display page after responding to the gifting operation request.

3. The method according to claim 2, wherein the trigger operation for the resource object filter configuration item is specifically a trigger operation for a corresponding identifier of a candidate filter configuration item comprised in the resource object filter configuration area, and the determining operation for the candidate block on the resource object filter configuration interface is specifically a trigger operation for a corresponding identifier of the candidate block on the resource object filter configuration interface, wherein the candidate geographic area comprises a first-level geographic area and a second-level geographic area, and the second-level geographic area is a geographic sub-area divided from the first-level geographic area.

4. The method according to claim 1, wherein the resource object display page comprises a resource object sorting configuration item, and displaying the candidate resource object corresponding to the gifting operation request on the resource object display page comprises:
displaying, in response to a trigger operation for a resource object sorting configuration item, a resource object sorting configuration interface corresponding to the resource object sorting configuration item, the resource object sorting configuration interface comprising a plurality of candidate sorting display modes for defining a resource object sorting effect;
determining, in response to a determining operation for a candidate sorting display mode, a target sorting display mode used for the candidate resource object corresponding to the gifting operation request that is displayed on the resource object display page, and displaying the candidate resource object corresponding to the gifting operation request on the resource object display page in the target sorting display mode, wherein the target sorting display mode comprises at least one of the following: a sorting display mode based on demand volumes of resource objects, a sorting display mode based on view counts of the resource objects, a sorting display mode based on distances of the resource objects, or a sorting display mode based on values of value attributes of the resource objects;
and/or the resource object display page comprises a plurality of pieces of candidate category information, and displaying the candidate resource object corresponding to the gifting operation request on the resource object display page comprises:
determining, in response to a determining operation for a piece of candidate category information, target category information corresponding to the gifting operation request, and displaying, on the resource object display page, the candidate resource object corresponding to the gifting operation request that belongs to the target category information.

5. The method according to claim 1, wherein displaying the gifting configuration interface for the resource object to be gifted comprises:
displaying a resource object to be gifted detail page corresponding to the resource object to be gifted, the resource object to be gifted detail page comprising second description information of the resource object to be gifted, and the number of pieces of information in the second description information being greater than that in the first description information; and
displaying, in response to obtaining a target permission for the resource object to be gifted on the resource object to be gifted detail page and triggering a determining operation for a gifting configuration, the gifting configuration interface for the resource object to be gifted, the target permission being used for controlling a usage state of the resource object to be gifted.

6. The method according to claim 5, wherein displaying, in response to obtaining the target permission for the resource object to be gifted on the resource object to be gifted detail page and a determining operation for gifting, the gifting configuration interface for the resource object to be gifted comprises:
displaying, in response to obtaining the target permission for the resource object to be gifted on the resource object to be gifted detail page and triggering the determining operation for the gifting configuration, a permission configuration interface for the resource object to be gifted; and
obtaining, in response to a configuration operation triggered for the permission configuration interface for the resource object to be gifted, the target permission for the resource object to be gifted and displaying the gifting configuration interface for the resource object to be gifted.

7. The method according to claim 1, wherein at least one piece of candidate packaging configuration information corresponding to the plurality of candidate display configuration items comprises at least one piece of cover pattern content configurable for the resource object to be gifted, input text content configurable for the resource object to be gifted, and animation content corresponding to the cover pattern content.

8. The method according to claim 1 or 7, wherein determining, in response to the configuration operation triggered for the gifting configuration interface, the target display configuration item corresponding to the gifting configuration interface comprises:
determining, in response to a configuration operation of inputting text content on the gifting configuration interface for the resource object to be gifted, input text content input through the configuration operation as the target packaging configuration information corresponding to the resource object to be gifted;
and/or the gifting configuration interface for the resource object to be gifted comprises a plurality of candidate cover patterns, and determining, in response to the configuration operation triggered for the gifting configuration interface, the target display configuration item corresponding to the gifting configuration interface comprises:
determining, in response to a configuration operation of selecting a candidate cover pattern in the gifting configuration interface for the resource object to be gifted, the candidate cover pattern selected through the configuration operation as the target packaging configuration information corresponding to the resource object to be gifted;
and/or the gifting configuration interface for the resource object to be gifted comprises a plurality of pieces of candidate gift receiving account information, and determining, in response to the configuration operation triggered for the gifting configuration interface, the target display configuration item corresponding to the gifting configuration interface comprises:
determining, in response to a configuration operation of selecting a piece of candidate gift receiving account information in the gifting configuration interface for the resource object to be gifted, the candidate gift receiving account information selected through the configuration operation as the target gift receiving account corresponding to the resource object to be gifted;
and/or after determining the candidate gift receiving account information selected through the configuration operation as the target gift receiving account corresponding to the resource object to be gifted, the method further comprises:
hiding, in response to a hiding operation triggered for the candidate gift receiving account information on the gifting configuration interface for the resource object to be gifted, the plurality of pieces of candidate gift receiving account information displayed on the gifting configuration interface for the resource object to be gifted, and redisplaying the plurality of candidate cover patterns on the gifting configuration interface for the resource object to be gifted, so as to select the candidate cover pattern in the gifting configuration interface for the resource object to be gifted, wherein
the candidate gift receiving account information is a selection trigger control corresponding to a candidate gift receiving account or a candidate gift receiving account.

9. The method according to claim 1, wherein sending, based on the target display configuration item, the resource object to be gifted to the target gift receiving account corresponding to the resource object to be gifted comprises:
sending, in response to a sending operation for the resource object to be gifted that is triggered for the gifting configuration interface for the resource object to be gifted, the resource object to be gifted displayed on the gifting configuration interface for the resource object to be gifted to the target gift receiving account corresponding to the resource object to be gifted based on the target display configuration item;
and/or sending the resource object to be gifted to the target gift receiving account corresponding to the resource object to be gifted based on the target display configuration item comprises:
playing a packaging animation corresponding to the resource object to be gifted on the gifting configuration interface for the resource object to be gifted based on the target display configuration item; and
after playing the packaging animation corresponding to the resource object to be gifted, moving a packaged resource object to be gifted from a side of a first direction to a side of a second direction on the gifting configuration interface for the resource object to be gifted until it is no longer displayed, so as to send the resource object to be gifted to the target gift receiving account corresponding to the resource object to be gifted, the first direction and the second direction being different or opposite directions.

10. An interaction apparatus, comprising:
a candidate resource object determining module configured to display, in response to a gifting operation request, a candidate resource object corresponding to the gifting operation request on a resource object display page, wherein the gifting operation request comprises a target block, and the target block is used for describing a predefined geographic area;
a page display module configured to use, in response to a determining operation for a candidate resource object, the candidate resource object as a resource object to be gifted, and display a gifting configuration interface for the resource object to be gifted, the gifting configuration interface comprising a plurality of candidate display configuration items corresponding to the resource object to be gifted, and the plurality of candidate display configuration items comprising at least one of the following types of information: at least one piece of candidate packaging configuration information, first description information of the resource object to be gifted, and at least one piece of candidate gift receiving account information; and
a sending module configured to determine, in response to a configuration operation triggered for the gifting configuration interface, a target display configuration item corresponding to the gifting configuration interface, and send, based on the target display configuration item, the resource object to be gifted to a target gift receiving account corresponding to the resource object to be gifted, so as to display the resource object to be gifted on the target gift receiving account based on the target display configuration item, the target display configuration item comprising target packaging configuration information corresponding to the resource object to be gifted and the target gift receiving account corresponding to the resource object to be gifted.

11. An electronic device, comprising:
one or more processors; and
a storage apparatus configured to store one or more programs,
the one or more programs, when executed by the one or more processors, causing the one or more processors to implement the interaction method according to any of claims 1 to 9.

12. A storage medium comprising computer-executable instructions, the computer-executable instructions, when executed by a computer processor, being used for performing the interaction method according to any of claims 1 to 9.
